# EUROPEAN PATENT SPECIFICATION

(11) **EP 3 118 489 B1**
(45) Date of publication and mention of the grant of the patent: **30.09.2020**
(21) Application number: 15761977.6
(22) Date of filing: 17.02.2015
(51) Int. Cl.: F16H 57/023, B60K 17/06, F04C 2/10, F04C 15/00

(54) **ATTACHMENT STRUCTURE FOR ELECTRIC OIL PUMP**
BEFESTIGUNGSSTRUKTUR FÜR ELEKTRISCHE ÖLPUMPE
STRUCTURE DE FIXATION POUR POMPE À HUILE ÉLECTRIQUE

(30) Priority: 14.03.2014 JP 2014052256; 14.03.2014 JP 2014052257
(43) Date of publication of application: 18.01.2017
(73) Proprietor: AISIN SEIKI KABUSHIKI KAISHA, Kariya-shi, Aichi 448-8650 (JP)
(72) Inventor: HAZAMA, Shinichiro, Kariya-shi Aichi 448-8650 (JP); ISOGAI, Shinsuke, Kariya-shi Aichi 448-8650 (JP); YOKOI, Toshiyuki, Kariya-shi Aichi 448-8650 (JP); HASHIMOTO, Takashi, Kariya-shi Aichi 448-8650 (JP)
(74) Representative: Kramer Barske Schmidtchen Patentanwälte PartG mbB
(86) International application number: PCT/JP2015/054273
(87) International publication number: WO 2015/137055

(56) References cited:
- EP-A1- 2 428 706
- WO-A2-2012/130225
- JP-A- 2005 214 140
- JP-A- 2006 188 968
- JP-A- 2011 032 980
- JP-A- 2011 174 582
- JP-U- S6 212 786
- US-A1- 2003 070 879

## Description

### TECHNICAL FILED

The present invention relates to a mounting structure for electric oil pump used for a vehicle such as a motorcar.

### BACKGROUND ART

Some kinds of vehicles including motorcars have recently been proposed taking into account of environmental problems, which vehicles include a function for turning off an engine during a short period of time when the vehicle is temporarily stopped at an intersection, for example, to reduce exhaust gas or gasoline consumption. Although the engine is not actuated when such a function is activated, it is still required in that case to maintain oil pressure for a transmission. Thus, the oil pressure is maintained with use of an electric oil pump that can be driven to supply and circulate oil (an example of "working oil") while the engine stops.

The electric oil pump is typically attached to a wall surface of an outside (outer wall) of a transmission case. The electric oil pump includes an oil intake opening connected to an oil pan reserving oil via a communication pipe with a distal end of the communication pipe being submerged in oil. As the electric oil pump is rotated to generate negative pressure, reserved oil is drawn up through the communication pipe, passes through the interior of the communication pipe, and then flows into the interior of the electric oil pump via the intake opening. The oil is then pressurized within the pump to be pressure fed to the interior of the transmission case through a discharge opening for circulation. The electric oil pump is driven by a motor forming a motor unit.

Patent Literature 1 discloses a structure for installing an electric oil pump, in which the electric oil pump is disposed in a lower part of an outer surface of a transmission case to draw up oil from an oil reservoir (oil pan) in the transmission case via an intake oil passage (communication pipe) and supply the oil to the transmission.

### CITATION LIST

Patent Literature 1: Japanese Unexamined Patent Application Publication No. 2010-276035

US 2003/0070879 A1 discloses an electric fluid pump for a transmission, transfer case or an oil reservoir. The pump is contained within the transmission, transfer case or engine oil reservoir and has an open housing which allows fluid into the motor for cooling and lubrication.

WO 2012/130225 A2 discloses a drive unit for a submerged oil pump comprising a housing, a motor compartment enclosed by the housing and a rotor disposed in the motor compartment. A first fluid path from a submerged oil environment of the housing into the motor compartment is provided in order to enable oil to flow from the submerged oil environment into the motor compartment.

JP 2005 214140 A discloses an oil pump with an outer rotor and an inner rotor. The inner rotor is composed of a material having higher expansion coefficient than the material of the outer rotor.

EP 2 428 706 A1 discloses an apparatus and method for controlling an electric oil pump driving motor.

### SUMMARY OF INVENTION

### TECHNICAL PROBLEM

When oil flows through the communication pipe, resistance caused by friction between oil and an inner wall of the communication pipe ("piping resistance" hereinafter) is generated. Thus, when oil is supplied to the electric oil pump through the communication pipe, it is required to determine output of power of the motor driving the electric oil pump based on the piping resistance in addition to viscosity resistance of the oil per se. As a result, greater output of power for the motor is required than in a case where only the oil viscosity resistance, which is essentially required, should be taken into account. This requires a larger motor. Using a large motor leads not only to increased cost but also to a large accommodating space for increased volume and weight of the motor, which is disadvantageous when mounted to an motorcar.

The piping resistance is proportional to the oil viscosity. Decrease in oil temperature increases the oil viscosity and thus the piping resistance, as a result which the motor is subject to increased load when started up, in particular, and might not be able to start up in the worst case.

Thus, there is room for further improvement in providing the electric oil pump using the communication pipe.

The electric oil pump is typically attached to and project from the outer wall of the transmission case. How large space there is around the transmission depends on a type of vehicle. If the vehicle cannot secure enough space for accommodating the projecting part of the electric oil pump, such a pump cannot be attached to the transmission case.

Further, the electric oil pump typically has an assembled construction in which a motor unit is fastened and screwed to a pump housing of a pump unit and a pump cover to form an integral structure. On the other hand, the electric oil pump is attached and fastened to the outer wall of the transmission through further screws. This means that two screw-fastening steps are required, which might result in increased work processes and thus increased cost.

Moreover, with the above arrangement of the electric oil pump, oil might leak from boundaries between the components screwed to each other, i.e., boundaries between the motor unit and the pump housing or between the pump housing and the pump cover. Oil leakage from the electric oil pump attached to the outside of the transmission case would result in a serious problem. To prevent such oil leakage, annual seals need to be provided to the boundaries between the above components, which also leads to increased cost.

Thus, there is room for further improvement in attaching the electric oil pump to the outside of the transmission case as well.

Under the circumstances, it has been desired that the electric oil pump be provided without using any communication pipe. It has also been desired that the electric oil pump be mounted regardless of whether space around the transmission case is small or large.

### SOLUTION TO PROBLEM

To achieve the above objects, the present invention is characterized by a mounting structure for electric oil pump including an electric oil pump and a transmission case, in which the electric oil pump includes a pump unit having a pump, a motor unit disposed adjacent to the pump unit and including a motor for rotating the pump, a motor case for housing at least part of the motor unit, and an intake opening formed in the motor case or the pump unit for supplying working oil to the pump unit, and the transmission case includes an oil pan for housing the electric oil pump. The electric oil pump is attached to the transmission case with at least the intake opening being submerged in the working oil reserved in the oil pan, at an inner wall of the transmission case.

With the above arrangement, the working oil is drawn up directly from the intake opening without needing to drawn up the oil through the communication pipe as in the conventional structure, as a result of which no piping resistance is generated. Thus, output of power of the motor can be determined only based on viscosity resistance of oil. This makes the motor compact to provide a more inexpensive electric oil pump.

In the mounting structure according to the present invention the electric oil pump further comprises a driver unit for supplying electric power to the motor and controlling rotating speed of the motor, wherein the driver unit is attached to an outer wall of the transmission case and located opposite to a portion of the inner wall of the transmission case where the electric oil pump is attached.

With the above arrangement, no working oil is adhered to the driver unit, and thus no malfunction of the driver unit would be caused by oil adhesion. Additionally, the driver unit is provided outside the transmission case, which facilitates heat radiation from the driver unit.

It is preferable in the mounting structure according to the present invention that a strainer screen is attached to the intake opening.

In the conventional arrangement in which the working oil is drawn up through the communication pipe, the strainer screen is attached to a distal end of the communication pipe submerged in the oil pan, and further an oil filter that is coarser than the strainer screen is attached to a boundary between an intake passage and the communication pipe of the electric oil pump. In contrast, according to the mounting structure of the present invention in which the electric oil pump is submerged in oil when attached to the transmission case, it is only required that the strainer screen is attached to the intake opening to remove foreign substances from oil, which dispenses with a coarser oil filter. As a result, further cost reduction for the electric oil pump is achieved.

It is preferable in the mounting structure according to the present invention that the pump unit includes an inner rotor, an outer rotor meshed with the inner rotor to rotate with rotation of the inner rotor, and a housing for accommodating the inner rotor and the outer rotor, the inner rotor and the outer rotor are made of different materials from each other, and the outer rotor is made of a material having a linear expansion coefficient greater than that of a material forming the housing.

In normal room temperature, a clearance between a thickness of the outer rotor and a depth of the housing and a clearance between an outer diameter of the outer rotor and an inner diameter of the housing are both larger than regular clearances provided in a typical pump. With such an arrangement, intake working oil leaks between pump chambers defined in the pump, which results in unsatisfactory pressurization of working oil in the pump. However, as the electric oil pump is started up to increase its temperature, both the housing and the outer rotor thermally expand. Since the outer rotor is made of a material having a linear expansion coefficient greater than that of a material forming the housing, the outer rotor expands greater than the housing. As a result, the clearances become small. These clearances are set to proper values for the electric oil pump when operated in normal condition. Thus, such an arrangement can reduce oil leakage between the pump chambers and improve volume efficiency of the electric oil pump.

It is preferable in the mounting structure according to the present invention that the driver unit receives a first signal which is outputted from the motor and corresponds to the rotating speed of the motor, and outputs the signal to an upper ECU as a second signal. The ECU determines whether the rotating speed of the motor falls within a normal range. The driver unit corrects the received first signal to a signal falling within the normal range when the first signal indicates that the motor rotates with a rotating speed outside the normal range and within a predetermined range of rotating speed outside the normal range, and outputs the corrected signal to the ECU as the second signal.

With the electric oil pump being driven, the first signal relating to the rotating speed transmitted from the motor is detected at the driver unit, converted to the second signal which is a pulse signal having a frequency corresponding to the rotating speed, and then transmitted to the upper ECU. In this, however, oil pressure required for supplying working oil to the transmission varies depending on vehicle types or environmental conditions such as surrounding temperature. In many cases, however, a range of normal rotation in the ECU is fixedly determined regardless of these conditions. Therefore, even if the electric oil pump supplies required oil pressure, an unusual rotation state is detected when the motor rotates with a rotating speed outside the normal range. According to the present invention, the driver unit corrects the received first signal to a signal falling within the normal range when the first signal indicates that the motor rotates with a rotating speed outside the normal range and within a predetermined range of rotating speed outside the normal range, and outputs the corrected signal to the ECU as the second signal. Performing such control of rotating speed of the motor allows the ECU to determine that the motor rotates with rotating speed within the normal range while feeding required oil pressure to the transmission without increasing the output of power of the motor.

It is preferable in the mounting structure according to the present invention that the first signal is corrected when the first signal indicates lower rotating speed than the normal range.

If the received first signal indicates that the rotating speed of the motor is higher than the normal range, there is a possibility that the motor is running idle. Such a condition is absolutely abnormal and thus, the driver unit must not generate a corrected signal as a second signal. However, when the rotating speed is lower than the normal range, the electric oil pump supplies required oil pressure in most cases in spite of low speed rotation of the motor. In view of this, the driver unit is configured to correct the first signal when the rotating speed is lower than the normal range to transmit the second signal indicating the normal range of rotating speed to the ECU. Such control allows the ECU to determine that the motor rotates with rotating speed within the normal range while feeding required oil pressure to the transmission without increasing the output of power of the motor.

It is preferable in the mounting structure according to the present invention that the intake opening is provided opposite to the pump unit across the motor unit, and the working oil flows within the motor unit and is supplied to the pump unit.

With the above arrangement in which the pump has a flow passage structure to draw up oil flowing within the motor unit, the pump can draw up oil that has high temperature and low viscosity due to heat generation caused by actuation of the motor. This allows the pump to smoothly rotate. Additionally, the oil contrariwise absorbs the heat generated by the motor when the oil communicates through the interior of the motor unit. Thus, the motor is not excessively heated and the rotation efficiency of the motor is not declined.

It is preferable in the mounting structure according to the present invention that the pump unit includes a pump housing and a pump cover, which are disposed adjacent to each other, the pump housing and the motor unit are integrally attached to an inner wall of the transmission case, and the pump cover is formed in the transmission case.

With the above arrangement in which the pump housing and the motor unit, which cover most of the volume of the electric oil pump, are attached to the inner wall of the transmission case inside the transmission, the electric oil pump does not protrude outward from the transmission. Thus, the electric oil pump can be mounted regardless of whether space around the transmission case is small or large, which means, regardless of vehicle types.

It is preferable in the mounting structure according to the present invention that a recess is formed in an outer wall of the transmission case, and the driver unit is housed in the recess.

With the above arrangement in which the driver unit also does not protrude outward from the transmission, the electric oil pump can be mounted regardless of whether space around the transmission case is small or large, which means that the pump can be mounted in vehicles of a wider range of types.

### BRIEF DESCRIPTION OF DRAWINGS

Fig. 1 is a sectional view of a mounting structure for electric oil pump according to a first embodiment;
Fig. 2A is an enlarged view of a part IIa in Fig. 1;
Fig. 2B is a sectional view taken on line IIb-IIb in Fig. 2A;
Fig. 3 is a descriptive view of control of rotating speed of a sensorless brushless DC motor by a driver unit;
Fig. 4 is a sectional view of the mounting structure for electric oil pump according to a variation of the first embodiment; and
Fig. 5 is a sectional view of the mounting structure for electric oil pump according to a second embodiment.

### DESCRIPTION OF EMBODIMENTS

### 1. First Embodiment

### [Construction of Electric Oil Pump]

### (1) Structure of Pump Unit

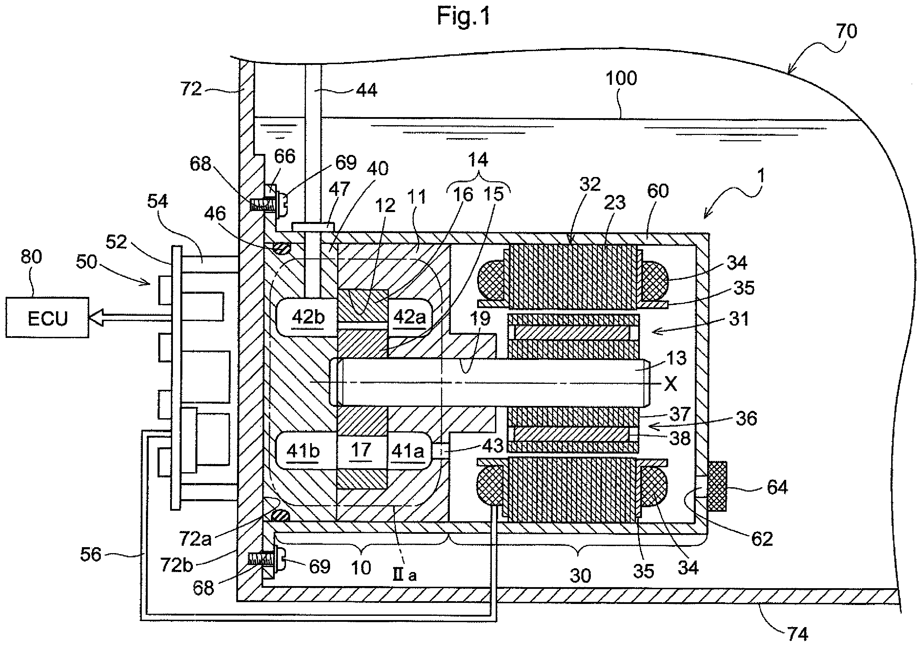

An electric oil pump according to a first embodiment of the present invention will be described hereinafter in detail in reference to the accompanying drawings. Referring to Fig. 1, the electric oil pump 1 according to the current embodiment is formed of a pump unit 10 and a motor unit 30. The pump unit 10 includes a pump housing 11, an inscribed gear pump 14, and a pump cover 40. The pump housing 11 and the pump cover 40 are examples of "housing," and the inscribed gear pump 14 is an example of "pump".

As illustrated in Fig. 1, the pump housing 11 includes a bottomed receiving recess 12 formed at one end face thereof. The receiving recess 12 is cylindrical in external configuration and is circular in section. An intake port 41a and a discharge port 42a are formed in a bottom surface of the receiving recess 12. An intake passage 43, which is a hole extending through the pump housing 11, is formed in a bottom surface of the intake port 41a. A shaft receiving hole 19 is formed in a position that is eccentric from an axis of the receiving recess 12 of the pump housing 11. A rotary shaft 13 extends through the shaft receiving hole 19 and an inner rotor 15 of the inscribed gear pump 14. The rotary shaft 13 is rotatably supported in the shaft receiving hole 19 to be rotatable in unison with the inner rotor 15 about a common rotation axis X.

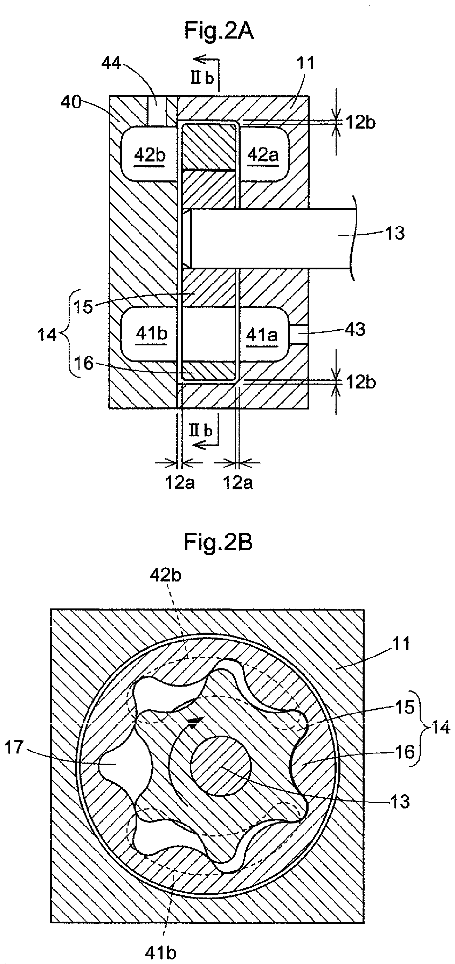

The inscribed gear pump 14 is housed in the receiving recess 12 and includes an outer rotor 16 in addition to the inner rotor 15. Referring to Fig. 2B, the inscribed gear pump 14 is structured such that outer teeth formed in the inner rotor 15 are meshed with inner teeth formed in the outer rotor 16. With rotation of the inner rotor 15, the outer rotor 16 rotates around the inner rotor 15. A number of pump chambers 17 are formed between the teeth of the inner rotor 15 and the teeth of the outer rotor 16. The capacity of each pump chamber increases or decreases with the rotation of the rotors.

The pump cover 40 is disposed adjacent to the pump housing 11 having the same outer diameter as that of the pump housing 11. The pump cover 40 and the pump housing 11 are fastened to each other through an unillustrated screw to form an integral unit. The pump cover 40 has an intake port 41b provided opposite to the intake port 41a across the receiving recess 12, and a discharge port 42b provided opposite to the discharge port 42a across the receiving recess 12. A discharge passage 44 extends outward from the discharge port 42b.

The intake ports 41a and 41b are crescent grooves as shown in Fig. 2B to communicate with the pump chambers 17 along a range in which the capacities of the pump chambers 17 of the inscribed gear pump 14 increase. Likewise, the discharge ports 42a and 42b are also crescent grooves as shown in Fig. 2B to communicate with the pump chambers 17 along a range in which the capacities of the pump chambers 17 of the inscribed gear pump 14 decrease.

According to the current embodiment, the inner rotor 15 and the outer rotor 16 are made of different materials, in which the outer rotor 16 is made of a material having a linear expansion coefficient greater than that of a material forming the pump housing 11 and the pump cover 40. As an example of material combinations, the inner rotor 15 is made of an iron sintered material, the outer rotor 16 is made of aluminum or an aluminum alloy, and the pump housing 11 and the pump cover 40 are made of iron. In another example, the inner rotor 15 is made of an iron sintered material, the outer rotor 16 is made of resin, and the pump housing 11 and the pump cover 40 are made of aluminum or an aluminum alloy.

Referring to Fig. 2A, the receiving recess 12 and the pump cover 40 define an accommodating space therebetween for the inscribed gear pump 14. In normal room temperature, the accommodating space has a dimension along the rotation axis X greater than a thickness of the outer rotor 16 along the rotation axis X, and a radial dimension greater than an outer diameter of the outer rotor 16. More particularly, a clearance 12a along the rotation axis X and a radial clearance 12b are defined between the accommodating space and the outer rotor 16. In normal room temperature, the clearance 12a and the radial clearance 12b are larger than a regular clearance provided in a typical pump, and dimensioned to allow intake oil (an example of "working oil") to leak between the pump chambers 17 and prevent the oil from being pressurized sufficiently.

Although there might be concern that volume efficiency in the electric oil pump 1 will be lowered in such a condition, staring up the electric oil pump 1 increases temperature of the inscribed gear pump 14 due to heat generation from the motor unit 30 or increase in temperature of oil caused by the start-up operation, as a result of which the clearances 12a and 12b become small in use. With the use of the pump in such a condition, no practical problem would arise with the clearances 12a and 12b being larger in normal room temperature. On the contrary, such clearances 12a and 12b can reduce friction between the outer rotor 16 and the pump housing 11 or the pump cover 40. This would avoid increase in load applied to the electric oil pump 1 in normal room temperature in which oil viscosity is greater than in higher temperature, and thus would not mar the start-up performance of the electric oil pump 1. Although the oil viscosity further increases at lower temperature than the normal room temperature, the clearances 12a and 12b also further increase, as a result of which the start-up performance of the electric oil pump 1 is maintained. With such an arrangement in which the outer rotor 16 is made of a material having a greater linear expansion coefficient than that of a material of the pump housing 11 or the pump cover 40, the electric oil pump 1 can start up in a stable manner regardless of start-up surrounding temperature.

Next, how the clearances 12a and 12b decrease when the electric oil pump 1 is actually actuated will be described hereinafter in more detail. As the electric oil pump 1 is started up to increase its temperature, all of the pump housing 11, the pump cover 40, and the outer rotor 16 thermally expand. In this time, the outer rotor 16 expands greater than the pump housing 11 and the pump cover 40 because the outer rotor 16 is made of a material having a greater linear expansion coefficient than that of a material of the pump housing 11 or the pump cover 40, as a result of which the clearances 12a and 12b become small. The clearances 12a and 12b are set to proper values in temperature at which the electric oil pump 1 is operated in normal condition. This reduces oil leakage between the pump chambers 17 and improves the volume efficiency of the electric oil pump 1.

### (2) Structure of Motor

As illustrated in Fig. 1, the motor unit 30 is disposed adjacent to the pump unit 10. The motor unit 30 includes a sensorless brushless DC motor 31. The sensorless brushless DC motor 31 is an example of "motor." The sensorless brushless DC motor 31 is formed of a cylindrical rotor 36, and an annular stator 32 that is positioned outward of the rotor 36 with a small gap. The rotor 36 and the stator 32 are coaxial with the rotation axis X.

The rotor 36 includes a cylindrical rotor yoke 37 formed of laminated electromagnetic steel sheets with magnets 38 embedded in and fixed thereto to be rotatable in unison with the rotary shaft 13. The stator 32 includes a stator core 33 formed of laminated electromagnetic steel sheets, insulating coil support frames 35 for covering teeth of the stator core 33, and coils 34 wound around the coil support frames 35. Alternating current is impressed to the coils 34 by power supply from an external driver unit 50 described later. The sensorless brushless DC motor 31 having no magnetic sensor such as a Hall element is configured to detect a rotating position of the rotor 36 using induced voltage caused by the coils 34 and switch energization to each of three phases of windings based on magnetic positional information obtained from the detected rotating position. The rotor 36 is rotated by repeated attraction and repellence between the coils 34 and the magnets 38 caused by alternating current, and then the inner rotor 15 is rotated with the rotation of the rotor 36.

### (3) Structure of Motor Case

As understood from Fig. 1, the pump unit 10 and the motor unit 30 are accommodated in an inner space of a bottomed, cylindrical motor case 60 made of metal such as iron and aluminum. Outer circumferential surfaces of the stator 32, the pump housing 11 and the pump cover 40 are fixed, e.g., welded or adhered, to an inner wall surface of the motor case 60. A groove is formed over the entire outer circumferential surface of the pump cover 40 to receive an annular seal 46. The annular seal 46 prevents oil from entering from a gap between the motor case 60 and the pump cover 40. Further, a seal 47 is provided on a side surface of the motor case 60 through which the discharge passage 44 extends, thereby to prevent oil from entering the interior of the motor case 60.

A through hole 62 is formed in a bottom surface of the motor case 60. The through hole 62 is an example of "intake opening." With this arrangement, external space of the electric oil pump 1 communicates with an inner space of the motor case 60 in which the motor unit 30 is disposed via the through hole 62. The inner space of the motor case 60 also communicates with the intake passage 43 of the pump housing 11 and further communicates with the inscribed gear pump 14 through the intake port 41a ahead.

A strainer screen 64 is attached to an outside of the through hole 62 of the motor case 60. The screen 64 is a metal mesh filter for catching and removing foreign substances from oil. This arrangement can keep oil that is drawn into the electric oil pump 1 via the through hole 62 from any foreign substances.

A collar-shaped flange 66 that is bent radially outward is provided at an opening end of the motor case 60, and a plurality of through holes 68 are formed in the flange 66 along its circumferential direction at regular intervals. The electric oil pump 1 is attached to a wall surface of a transmission case 72 via the through holes 68.

### [Mounting Structure for Electric Oil Pump]

Referring to Fig. 1, the electric oil pump 1 is fixedly attached to an inner wall 72a acting as an inner side wall of the transmission case 72 via screws 69 extending through the through holes 68 formed in the flange 66. The interior part of the transmission case 72 also acts as an oil pan 74 for reserving oil, in which the electric oil pump 1 is located under an oil surface 100 and completely submerged in oil. The oil surface 100 borders on air when oil circulates within a transmission 70. The electric oil pump 1 may be exposed in part above the oil surface 100. In such a condition, however, the through holes 62 need to be always located under the oil surface 100 during operation of the electric oil pump 1. A mounting position of the electric oil pump 1 to the inner wall 72a is determined based on an inclination of the electric oil pump 1 relative to the oil surface 100 when an unillustrated vehicle (motorcar) travels a slope, for example. A condition in which at least the through holes 62 of the electric oil pump 1 are located under the oil surface 100 during operation of the electric oil pump 1 is referred to as "submerged in oil" hereinafter.

The driver unit 50 is attached to an outer side of the transmission case 72, i.e., the opposite side of the electric oil pump 1 across the inner wall 72a of the transmission case 72. The driver unit 50 is configured to supply electric power to the sensorless brushless DC motor 31 of the electric oil pump 1 for driving and control operations such as driving, rotation, and stop of the sensorless brushless DC motor 31. Further, the driver unit 50 calculates rotating speed of the sensorless brushless DC motor 31 based on an input of the induced voltage caused by the coils 34, and transmits (outputs) the rotating speed to an upper ECU (Electronic Control Unit) 80. The driver unit 50 includes electronic components such as a microcomputer, a capacitor, a comparator, and a switching element, which are mounted on a substrate 52. The driver unit 50 is attached to an outer wall 72b, which is the outer side wall of the transmission case 72 through legs 54. Power supply from the driver unit 50 to the coils 34 and electric-signal communication between the driver unit 50 and the coils 34 are performed via a covered cable 56 or connecting pins connected therebetween through connectors or soldering. Fig. 1 shows that the covered cable 56 extends through the transmission case 72 and the motor case 60. Unillustrated seals are provided in portions of the cases through which the cable extends to prevent oil from seeping out to the outside of the transmission 70 or seeping into the interior of the electric oil pump 1.

### [Operations of Electric Oil Pump]

Next, operations of the electric oil pump 1 when actuated will be described hereinafter. Referring to Fig. 1, the electric oil pump 1 is submerged in oil. Thus, oil reserved in the oil pan 74 enters the motor unit 30 and the pump unit 10 within the motor case 60 through the screen 64 and the through hole 62, that is, the motor case 60 is filled with oil even when the pump is not actuated. As electric power is supplied to the coils 34 from the driver unit 50 in response to an instruction from the ECU 80 in this condition, the coils 34 of the sensorless brushless DC motor 31 are impressed to generate a rotation magnetic field, which causes rotation of the rotor 36. The rotation of the rotor 36 is transmitted to the inner rotor 15 of the inscribed gear pump 14 through the rotary shaft 13 to rotate the inner rotor 15. This generates negative pressure in the pump chambers 17 facing the intake ports 41a and 41b. As a result, the oil reserved in the oil pan 74 passes through the screen 64 and the through hole 62 and is drawn into the motor unit 30. The oil then flows through a gap between the rotor 36 and the stator 32 and gaps between the adjacent coils 34 wound around the stator cores 33 to reach the intake port 41a through the intake passage 43. The oil drawn in the pump chambers 17 through the intake ports 41a and 41b is pressure fed to the discharge ports 42a and 42b, and then discharged to the discharge passage 44 through the discharge port 42b. The discharged oil is fed to unillustrated parts of the interior of the transmission 70 and other parts. The fed oil lubricates and cools these parts, and then flows back to the oil pan 74 to be reserved there. Part of the oil drawn into the motor unit 30 enters between the shaft receiving hole 19 of the pump housing 11 and the rotary shaft 13 to lubricate the shaft support portion.

In the current embodiment, the oil is directly drawn from the through hole 62 with the electric oil pump 1 being submerged in oil, and thus is not required to be drawn from a communication pipe as in a conventional manner, as a result of which no piping resistance is generated. In this, it is possible to determine output of power from the sensorless brushless DC motor 31 only based on viscosity resistance, which can downsize the sensorless brushless DC motor 31 and provide a more inexpensive electric oil pump 1.

In the conventional arrangement in which oil is drawn from a communication pipe, a strainer screen is attached to a distal end of the communication pipe submerged in the oil pan 74, and an oil filter, which is coarser than the strainer screen, is attached to a border between the intake passage 43 of the electric oil pump 1 and the communication pipe. On the other hand, in the current embodiment, the electric oil pump 1 is submerged in oil when attached to the transmission case 72, and it is only required that the screen 64 be attached to the outside of the through hole 62 to remove foreign substances from the oil, which dispenses with any oil filter. In this aspect as well, the cost reduction for the electric oil pump 1 can be achieved.

According to the current embodiment in which the inscribed gear pump 14 has a flow passage arrangement to draw oil flowing within the motor unit 30, the inscribe gear pump 14 can draw oil that has high temperature and low viscosity due to heat generation caused by actuation of the sensorless brushless DC motor 31. This allows the inscribed gear pump 14 to smoothly rotate. Additionally, the oil contrariwise absorbs the heat generated by the sensorless brushless DC motor 31 when the oil communicates through the interior of the motor unit 30. Thus, the sensorless brushless DC motor 31 is not excessively heated and the rotation efficiency of the sensorless brushless DC motor 31 is not lowered.

The present invention is not limited to the current embodiment in which the through hole 62 is formed in the bottom surface of the motor case 60. The electric oil pump 1 may be attached with the through hole 62 being formed in a part of the side surface of the motor case 60 away from the pump unit 10 to open downward in Fig. 1 (to be opposed to the bottom of the oil pan 74).

### [Control of Rotating Speed of Sensorless Brushless DC Motor]

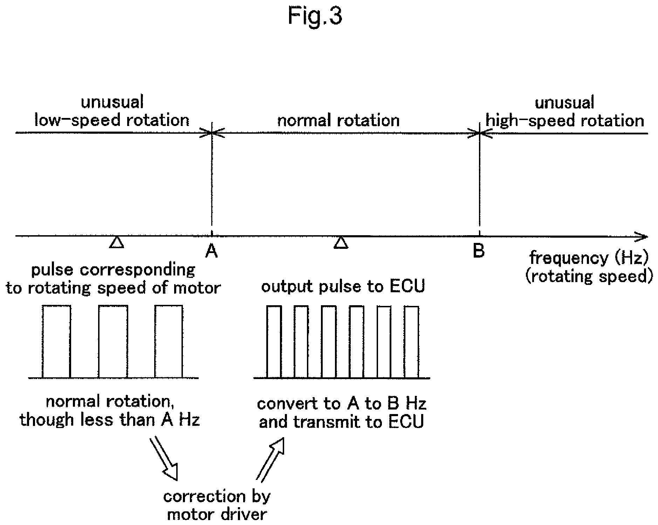

While the engine is stopped due to a function for turning off the engine when a vehicle is temporarily stopped, it is required that the sensorless brushless DC motor 31 of the electric oil pump 1 rotate with a proper rotating speed to allow the electric oil pump 1 to supply proper oil pressure to the transmission 70. The rotating speed of the sensorless brushless DC motor is calculated at the driver unit 50, converted to a pulse signal of a frequency corresponding to the rotating speed, and is transmitted to the upper ECU 80. Referring to Fig. 3, the ECU 80 determines a state of motor to be a normal rotation state if the rotating speed transmitted from the driver unit 50 is within a predetermined range (A Hz to B Hz in Fig. 3), an unusual high-speed rotation state if the rotating speed is higher than the predetermined range, and an unusual low-speed rotation state if the rotating speed is lower than the predetermined range.

As described above, the sensorless brushless DC motor 31 has no magnetic sensor such as a Hall element and detects a rotating position of the rotor 36 using induced voltage caused by the coils 34. Thus, the pulse signal corresponding to the rotating speed of the sensorless brushless DC motor 31 is calculated based on a period of the induced voltage. The induced voltage caused by the coils 34 is an example of "first signal," and the pulse signal transmitted to the ECU 80 is an example of "second signal."

Oil pressure of the electric oil pump 1, which is required for supplying oil to the transmission 70, varies depending on vehicle types or environmental conditions such as surrounding temperature. In many cases, however, a range of normal rotation in the ECU 80 (referred to as "normal range" hereinafter) is fixedly determined regardless of these conditions. Thus, the unusual low-speed rotation state is detected when the rotating speed of the sensorless brushless DC motor 31 is lower than the normal range even when the electric oil pump 1 supplies required oil pressure. Once the unusual state is detected, the function for turning off the engine when the vehicle is temporarily stopped is no longer activated.

In the control of the rotating speed of the sensorless brushless DC motor 31 in the current embodiment, when the rotating speed of the sensorless brushless DC motor 31 is lower than the normal range of the ECU 80 with the electric oil pump 1 supplying required oil pressure to the transmission 70, the pulse signal is corrected to a signal with a frequency that is determined by the driver unit 50 as falling within the normal range and then transmitted to the ECU 80. More specifically, the driver unit 50 corrects the pulse signal of a frequency corresponding to the rotating speed calculated based on the induced voltage to a pulse signal with a higher frequency, which is then transmitted to the ECU 80. As a result, the ECU 80 determines that the sensorless brushless DC motor 31 of the electric oil pump 1 rotates with rotating speed that falls within the normal range without detecting the unusual low speed rotation.

The driver unit 50 stores data in the form of table, which data relates to the rotating speed of the sensorless brushless DC motor 31 in which required oil pressure can be fed to the transmission 70 in response to the vehicle types or the environmental conditions. When the sensorless brushless DC motor 31 rotates with rotating speed greater than the rotating speed within the normal range, i.e., rotates with a rotating speed outside the normal range and within a predetermined range of rotating speed outside the normal range, a pulse signal with a frequency that is determined as falling within the normal range is transmitted to the ECU 80.

Performing the above control of the rotating speed of the sensorless brushless DC motor 31 allows the ECU 80 to determine that the sensorless brushless DC motor 31 rotates within the normal range with required oil pressure being fed to the transmission 70 without increasing the output of power of the sensorless brushless DC motor 31.

### 2. Variation of First Embodiment

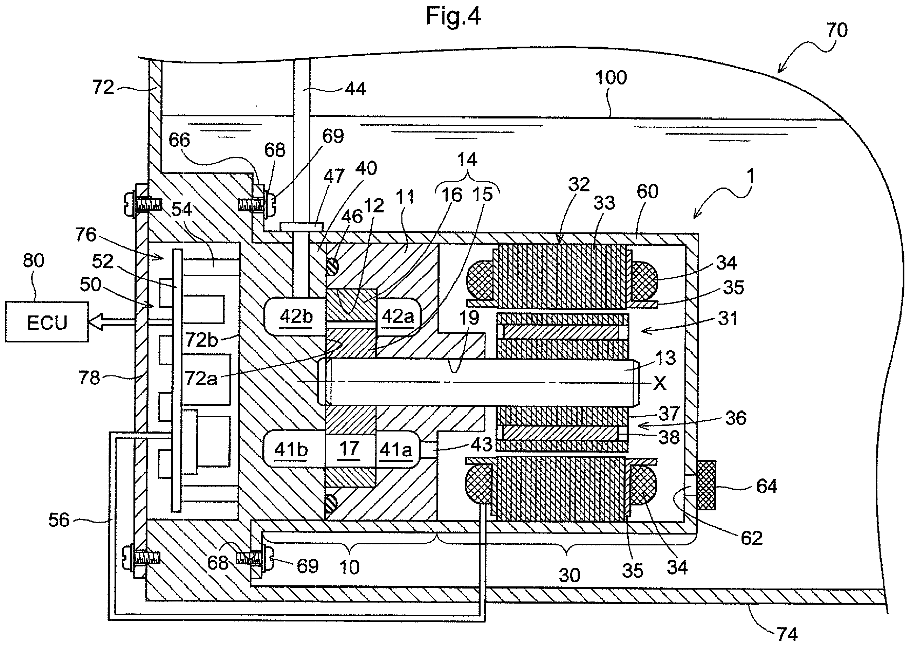

A mounting structure for the electric oil pump 1 according to a variation of the first embodiment of the present invention will be described hereinafter in reference to Fig. 4. Here, like numerals or symbols indicate like elements or structures both in this variation and in the first embodiment. The descriptions of the same elements or structures are omitted hereinafter. Unlike the first embodiment, the variation provides a mounting structure for the electric oil pump 1 in which the inner part of the transmission case 72 forms the pump cover 40, the transmission case 72 has a recess 76 for receiving the driver unit 50, which recess is concaved inward in a portion where the electric oil pump 1 is attached. Additionally, a cover 78 is attached to the recess 76. The other structures are the same as in the first embodiment.

In this variation as well, the electric oil pump 1 is also submerged in oil, in which oil is directly drawn from the through hole 62 and thus the output of power of the sensorless brushless DC motor 31 can be determined only based on the viscosity resistance of oil irrespective of piping resistance. This makes the sensorless brushless DC motor 31 compact to provide a more inexpensive electric oil pump 1. Additionally, as the electric oil pump 1 is submerged in oil when attached to the transmission case, it is only required that the screen 64 be attached to the outside of the through hole 62 to remove foreign substances from oil, which dispenses with a coarse oil filter. In this aspect as well, the cost reduction for the electric oil pump 1 can be achieved.

### 3. Second Embodiment

### [Construction of Electric Oil Pump]

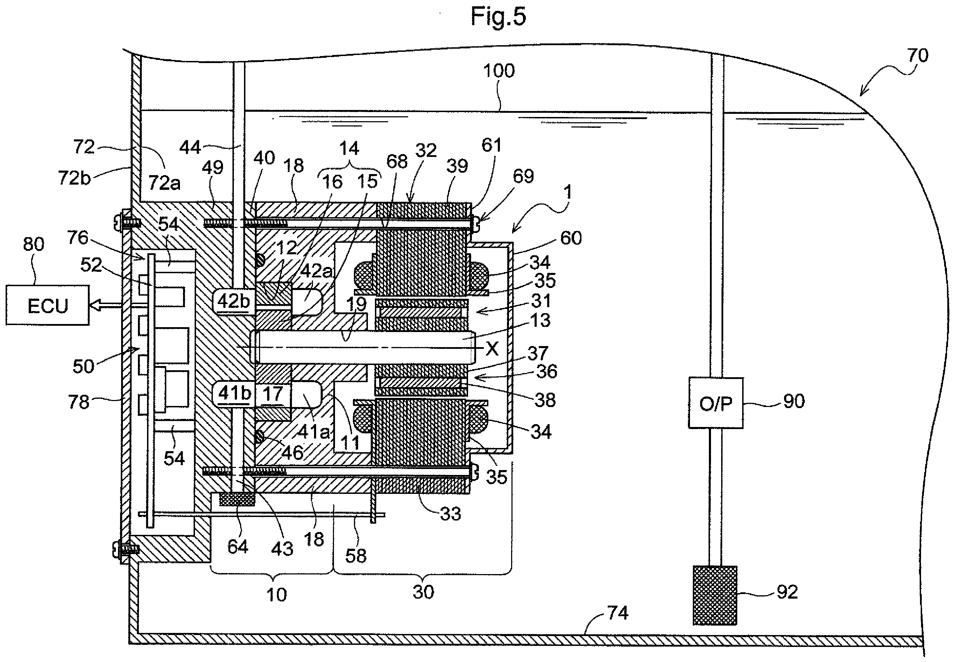

Next, the electric oil pump 1 according to a second embodiment of the present invention will be described in reference to Fig. 5. Here, like numerals or symbols indicate like elements or structures throughout the first embodiment, the variation of the first embodiment, and the second embodiment. The descriptions of the same elements or structures are omitted hereinafter.

### (1) Structure of Pump Unit

In the current embodiment, two stays 18 are formed along an outer circumference of the pump housing 11 with intervals of 180 degrees, each of the stays radially projecting from the outer circumferential surface of the pump housing 11. Each stay 18 has a through hole 68 through which a later-described screw 69 extends. The stays 18 may be provided in three or more positions.

The pump cover 40 is provided adjacent to the pump housing 11. In the same manner as in the variation of the first embodiment, the pump cover 40 is machined to the inner wall 72a of the transmission case 72 to be formed as part of the transmission case 72. The part of the transmission case 72 acting as the pump cover 40 is thicker than the other parts and projected inward of the transmission case 72. The pump cover 40 has the intake port 41b provided opposite to the intake port 41a across the receiving recess 12, and the discharge port 42b provided opposite to the discharge port 42a across the receiving recess 12.

The intake passage 43 extends outward from the intake port 41b, and the discharge passage 44 extends outward from the discharge port 42b. The intake passage 43 has an outer end submerged in oil reserved in the oil pan 74 to draw oil into the interior (intake ports 41a and 41b) of the electric oil pump 1 by negative pressure generated in the pump chambers 17 when the inscribed gear pump 14 rotates. The screen 64 for a strainer 92 is attached to the outer end of the intake passage 43 to prevent foreign substances present in oil from entering the interior of the electric oil pump 1. The intake passage 43 is an example of "intake opening" in the current embodiment.

Two stays 49 are formed along an outer circumference of the pump cover 40 with intervals of 180 degrees, each of the stays radially projecting from the outer circumferential surface of the pump cover 40. Each stay 49 has a threaded groove to receive the later-described screw 69. The stays 49 are aligned with the stays 18 of the pump housing 11.

### (2) Structure of Motor Unit

In the motor unit 30 according to the current embodiment, two stays 39 are formed along an outer circumference of the stator core 33 with intervals of 180 degrees, each of the stays radially projecting from the outer circumferential surface of the stator core 33. Each stay 39 has the through hole 68 through which the later-described screw 69 extends. The stays 39 are aligned with the stays 18 of the pump housing 11 and the stays 49 of the pump cover 40.

### (3) Structure of Motor Case

Referring to Fig. 5, the bottomed, cylindrical motor case 60 made of metal such as iron or aluminum is disposed to receive part of the motor unit 30 (right part in Fig. 5) in the current embodiment. Two stays 61 are formed along an outer circumference of the motor case 60 with intervals of 180 degrees, each of the stays radially projecting from the outer circumferential surface of the motor case 60. Each stay 61 has the through hole 68 through which the later-described screw 69 extends. The stays 61 are aligned with the stays 18 of the pump housing 11, the stays 49 of the pump cover 40, and the stays 39 of the stator core 33.

### [Mounting Structure for Electric Oil Pump]

Referring to Fig. 5, the electric oil pump 1 is assembled by inserting the screw 69 into the through hole 68 formed in the stays 61, 39 and 18 to engage with the threaded groove of the stay 49 with these stays being aligned. With such an arrangement, the pump housing 11 and the motor unit 30 are integrally formed to provide the electric oil pump 1 attached to the inner wall 72a of the transmission case 72.

In the same manner as in the first embodiment and the variation of the first embodiment, the electric oil pump 1 is located under the oil surface 100 and completely submerged in oil. The oil surface 100 borders on air when oil circulates within the transmission 70. In this, the electric oil pump 1 may be exposed in part above the oil surface 100. In such a condition, however, the outer end of the intake passage 43 for drawing oil needs to be always located under the oil surface 100 during operation of the electric oil pump 1. A mounting position of the electric oil pump 1 to the inner wall 72a is determined based on an inclination of the electric oil pump 1 relative to the oil surface 100 when a vehicle (motorcar) travels a slope, for example. A condition in which at least the outer end of the intake passage 43 of the electric oil pump 1 is located under the oil surface 100 is referred to as "submerged in oil" in the current embodiment.

In the same manner as in the variation of the first embodiment, the recess 76 is formed in the outer wall 72b, which is the outer side surface of the transmission case 72, for receiving the driver unit 50. Additionally, the cover 78 is attached to the recess 76.

As illustrated in Fig. 5, the driver unit 50 is electrically connected to the coils 34 through connecting pins 58. On the side of the driver unit 50, the connecting pins 58 extend through the substrate 52 to be soldered to lands of a wiring pattern. On the side of the coil 34, the connecting pins 58 are held extending through the coil support frames 35 with the coil winding drawn out of the coils 34 along the coil support frames 35 and bound up to and soldered to the connecting pins 58. Fig. 5 shows that the connecting pins 58 extend through the transmission case 72. An unillustrated seal is provided in this portion of the transmission case 72 through which the connecting pins extend, thereby to prevent oil from seeping out to the outside of the transmission 70.

### [Operations of Electric Oil Pump]

Next, operations of the electric oil pump 1 when actuated will be described hereinafter. Referring to Fig. 5, the electric oil pump 1 is submerged in oil. Thus, oil reserved in the oil pan 74 flows into the intake ports 41a and 41b through the screen 64 and the intake passage 43 even when the pump is not actuated. As electric power is supplied to the coils 34 from the driver unit 50 in response to an instruction from the ECU 80 in this condition, the coils 34 of the sensorless brushless DC motor 31 are impressed to generate a rotation magnetic field, which causes rotation of the rotor 36. The rotation of the rotor 36 is transmitted to the inner rotor 15 of the inscribed gear pump 14 through the rotary shaft 13 to rotate the inner rotor 15. This generates negative pressure in the pump chambers 17 facing the intake ports 41a and 41b. As a result, oil drawn into the pump chambers 17 through the intake ports 41a and 41b is pressure fed to the discharge ports 42a and 42b, and then discharged to the discharge passage 44 through the discharge port 42b. The discharged oil is fed to unillustrated parts of the interior of the transmission 70 to generate oil pressure there, and then flows back to the oil pan 74 to be reserved there.

In the current embodiment as well, oil is directly drawn from the side surface of the pump cover 40 into the intake passage 43 with the electric oil pump 1 being attached to the transmission case 72 while submerged in oil, as a result of which no piping resistance is generated. Accordingly, in the current embodiment as well, it is possible to determine output of power from the sensorless brushless DC motor 31 only based on viscosity resistance irrespective of piping resistance, which can downsize the sensorless brushless DC motor 31 and provide a more inexpensive electric oil pump 1.

### INDUSTRIAL APPLICABILITY

The present invention is applicable to a mounting structure for electric oil pump used for a vehicle such as an motorcar.

### DESCRIPTION OF REFERENCE NUMERALS

- 1: electric oil pump
- 10: pump unit
- 11: pump housing (housing)
- 14: inscribed gear pump (pump)
- 15: inner rotor
- 16: outer rotor
- 30: motor unit
- 31: sensorless brushless DC motor (motor)
- 40: pump cover (housing)
- 50: driver unit
- 60: motor case
- 62: through hole (intake opening)
- 64: screen
- 72: transmission case
- 72a: inner wall
- 74: oil pan
- 76: recess
- 80: ECU

## Claims

1. A mounting structure for an electric oil pump comprising:
an electric oil pump (1) including
a pump unit (10) having a pump (14),
a motor unit (30) disposed adjacent to the pump unit (10) and including a motor (31) for rotating the pump (14),
a motor case (60) for housing at least part of the motor unit (30), and
an intake opening (62) formed in the motor case (60) or the pump unit (10) for supplying working oil to the pump unit; and
a transmission case (72) including an oil pan (74) for housing the electric oil pump (1),
wherein the electric oil pump (1) is configured to be attached to an inner wall (72a) of the transmission case (72) with at least the intake opening (62) being submerged in the working oil reserved in the oil pan (74),
wherein the electric oil pump (1) further comprises a driver unit (50) for supplying electric power to the motor (31) and controlling rotating speed of the motor (31), and
**characterised in that**
the driver unit (50) is configured to be attached to an outer wall (72b) of the transmission case (72) and located opposite to a portion of the inner wall (72a) of the transmission case (72) where the electric oil pump (1) is attached.

2. The mounting structure according to claim 1, wherein a strainer screen (64) is attached to the intake opening (62).

3. The mounting structure according to any one of claims 1 to 2, wherein
the pump unit (10) includes an inner rotor (15), an outer rotor (16) meshed with the inner rotor to rotate with rotation of the inner rotor, and a housing (40) for accommodating the inner rotor and the outer rotor,
wherein the inner rotor (15) and the outer rotor (16) are made of different materials from each other, and
wherein the outer rotor (16) is made of a material having a linear expansion coefficient greater than that of a material forming the housing (40).

4. The mounting structure according to any one of claims 1 to 3,
wherein the driver unit (50) receives a first signal which is outputted from the motor (31) and corresponds to the rotating speed of the motor, and outputs the signal to an upper ECU (80) as a second signal,
wherein the ECU (80) determines whether the rotating speed of the motor (31) falls within a normal range, and
wherein the driver unit (50) corrects the received first signal to a signal falling within the normal range when the first signal indicates that the motor (31) rotates with a rotating speed outside the normal range and within a predetermined range of rotating speed outside the normal range, and outputs the corrected signal to the ECU (80) as the second signal.

5. The mounting structure according to claim 4, wherein the first signal is corrected when the first signal indicates lower rotating speed than the normal range.

6. The mounting structure according to any one of claims 1 to 5, wherein
the intake opening (62) is provided opposite to the pump unit (10) across the motor unit (30), and
wherein the working oil flows within the motor unit (30) and is supplied to the pump unit (10).

7. The mounting structure according to any one of claims 1 to 6, wherein
the pump unit (10) includes a pump housing (11) and a pump cover (40), which are disposed adjacent to each other,
wherein the pump housing (11) and the motor unit (30) are configured to be integrally attached to an inner wall of the transmission case (72), and
wherein the pump cover (40) is formed in the transmission case (72).

8. The mounting structure according to claim 7, wherein
a recess (76) is formed in an outer wall of the transmission case (72), and
wherein the driver unit (50) is configured to be housed in the recess (76).

## Patentansprüche

1. Befestigungsstruktur für eine elektrische Ölpumpe, mit:
einer elektrischen Ölpumpe (1) mit
einer Pumpeneinheit (10) mit einer Pumpe (14),
einer Motoreinheit (30), die benachbart zu der Pumpeneinheit (10) angeordnet ist und einen Motor (31) zum Drehen der Pumpe (14) aufweist,
einem Motorgehäuse (60) zum Aufnehmen mindestens eines Teils der Motoreinheit (30) und
einer Einlassöffnung (62), die in dem Motorgehäuse (60) oder der Pumpeneinheit (10) zum Zuführen eines Arbeitsöls zu der Pumpeneinheit ausgebildet ist; und
einem Getriebegehäuse (72) mit einer Ölpfanne (74) zum Aufnehmen der elektrischen Ölpumpe (1),
bei der die elektrische Ölpumpe (1) dazu ausgebildet ist, an einer Innenwand (72a) des Getriebegehäuses (72) angebracht zu werden, wobei mindestens die Einlassöffnung (62) in das in der Ölpfanne (74) enthaltene Arbeitsöl getaucht ist,
bei der die elektrische Ölpumpe (1) ferner eine Treibereinheit (50) zum Zuführen von elektrischer Leistung zu dem Motor (31) und Steuern einer Drehzahl des Motors (31) aufweist, und
**dadurch gekennzeichnet, dass**
die Treibereinheit (50) dazu ausgebildet ist, an einer Außenwand (72b) des Getriebegehäuses (72) angebracht zu werden und einem Abschnitt der Innenwand (72a) des Getriebegehäuses (72), in dem die elektrische Ölpumpe (1) angebracht ist, gegenüberzuliegen.

2. Befestigungsstruktur nach Anspruch 1, bei der ein Schmutzfänger (64) an der Einlassöffnung (62) angebracht ist.

3. Befestigungsstruktur nach einem der Ansprüche 1 bis 2, bei der
die Pumpeneinheit (10) einen inneren Rotor (15), einen äußeren Rotor (16), der zur Drehung mit einer Drehung des inneren Rotors mit dem inneren Rotor verzahnt ist, und ein Gehäuse (40) zum Aufnehmen des inneren Rotors und des äußeren Rotors aufweist,
bei der der innere Rotor (15) und der äußere Rotor (16) aus zueinander unterschiedlichen Materialien hergestellt sind und
bei der der äußere Rotor (16) aus einem Material mit einem linearen Ausdehnungskoeffizienten, der größer als der eines Materials, das das Gehäuse (10) bildet, hergestellt ist.

4. Befestigungsstruktur nach einem der Ansprüche 1 bis 3,
bei der die Treibereinheit (50) ein erstes Signal, das von dem Motor (31) ausgegeben wird und der Drehzahl des Motors entspricht, empfängt und das Signal zu einer oberen ECU (80) als ein zweites Signal ausgibt,
bei der die ECU (80) bestimmt, ob die Drehzahl des Motors (31) in einen normalen Bereich fällt, und
bei der die Treibereinheit (50) das empfangene erste Signal zu einem Signal, das in den normalen Bereich fällt, korrigiert, wenn das erste Signal angibt, dass sich der Motor (31) mit einer Drehzahl außerhalb des normalen Bereichs und innerhalb eines vorbestimmten Bereichs einer Drehzahl außerhalb des normalen Bereichs dreht, und das korrigierte Signal als das zweite Signal zu der ECU (80) ausgibt.

5. Befestigungsstruktur nach Anspruch (4), bei der das erste Signal korrigiert wird, wenn das erste Signal eine niedrigere Drehzahl als den normalen Bereich angibt.

6. Befestigungsstruktur nach einem der Ansprüche 1 bis 5, bei der
die Einlassöffnung (62) über der Motoreinheit (30) gegenüber der Pumpeneinheit (10) vorgesehen ist und
bei der das Arbeitsöl in der Motoreinheit (30) strömt und der Pumpeneinheit (10) zugeführt wird.

7. Befestigungsstruktur nach einem der Ansprüche 1 bis 6, bei der
die Pumpeneinheit (10) ein Pumpengehäuse (11) und eine Pumpenabdeckung (40), die benachbart zueinander angeordnet sind, aufweist
bei der das Pumpengehäuse (11) und die Motoreinheit (30) so ausgebildet sind, dass sie integral an einer Innenwand des Getriebegehäuses (72) angebracht werden, und
bei der die Pumpenabdeckung (40) in dem Getriebegehäuse (72) ausgebildet ist.

8. Befestigungsstruktur nach Anspruch 7, bei der
eine Vertiefung (76) in einer Außenwand des Getriebegehäuses (72) ausgebildet ist und bei der die Treibereinheit (50) dazu ausgebildet ist, in der Vertiefung (76) aufgenommen zu werden.

## Revendications

1. Structure de fixation pour une pompe à huile électrique comprenant.
une pompe à huile électrique (1) comprenant
une unité de pompe (10) comportant une pompe (14),
une unité de moteur (30) disposée à côté de l'unité de pompe (10) et comprenant un moteur (31) pour faire tourner la pompe (14),
un carter de moteur (60) pour loger au moins une partie de l'unité de moteur (30), et
une ouverture d'admission (62) formée dans le carter de moteur (60) ou l'unité de pompe (10) pour l'alimentation en huile de travail de l'unité de pompe ; et
un carter de transmission (72) comprenant un bac à huile (74) pour loger la pompe à huile électrique (1),
dans laquelle la pompe à huile électrique (1) est configurée pour être attachée à une paroi intérieure (72a) du carter de transmission (72) avec au moins l'ouverture d'admission (62) submergée dans l'huile de travail réservée dans le bac à huile (74),
dans laquelle la pompe à huile électrique (1) comprend en outre une unité de commande (50) pour l'alimentation en énergie électrique au moteur (31) et contrôler la vitesse de rotation du moteur (31), et
**caractérisée en ce que**
l'unité de commande (50) est configurée pour être attachée à une paroi extérieure (72b) du carter de transmission (72) et située à l'opposé d'une partie de la paroi intérieure (72a) du carter de transmission (72) où est attachée la pompe à huile électrique (1).

2. Structure de fixation selon la revendication 1, dans laquelle une crépine (64) est attachée à l'ouverture d'admission (62).

3. Structure de fixation selon l'une quelconque des revendications 1 à 2, dans laquelle l'unité de pompe (10) comprend un rotor intérieur (15), un rotor extérieur (16) en prise avec le rotor intérieur pour tourner avec la rotation du rotor intérieur, et un logement (40) pour accommoder le rotor intérieur et le rotor extérieur,
dans laquelle le rotor intérieur (15) et le rotor extérieur (16) sont fabriqués dans des matériaux différents l'un de l'autre, et
dans laquelle le rotor extérieur (16) est constitué d'un matériau comportant un coefficient de dilatation linéaire supérieur à celui d'un matériau formant le logement (40).

4. Structure de fixation selon l'une quelconque des revendications 1 à 3,
dans laquelle l'unité de commande (50) reçoit un premier signal qui est émis par le moteur (31) et correspond à la vitesse de rotation du moteur, et émet le signal vers une ECU supérieure (80) en tant que second signal,
dans laquelle l'ECU (80) détermine si la vitesse de rotation du moteur (31) se situe dans une plage normale, et
dans laquelle l'unité de commande (50) corrige le premier signal reçu en un signal tombant dans la plage normale lorsque le premier signal indique que le moteur (31) tourne avec une vitesse de rotation en dehors de la plage normale et dans une plage prédéterminée de vitesse de rotation en dehors de la plage normale, et émet le signal corrigé à l'ECU (80) en tant que le second signal.

5. Structure de fixation selon la revendication 4, dans laquelle le premier signal est corrigé lorsque le premier signal indique une vitesse de rotation inférieure à la plage normale.

6. Structure de fixation selon l'une quelconque des revendications 1 à 5, dans laquelle l'ouverture d'admission (62) est prévue à l'opposé de l'unité de pompe (10) à travers l'unité de moteur (30), et
dans laquelle l'huile de travail circule dans l'unité de moteur (30) et est alimentée à l'unité de pompe (10).

7. Structure de fixation selon l'une quelconque des revendications 1 à 6, dans laquelle l'unité de pompe (10) comprend un logement de pompe (11) et un couvercle de pompe (40), qui sont disposés l'un à côté de l'autre,
dans laquelle le logement de pompe (11) et l'unité de moteur (30) sont configurés pour être intégralement attachés à une paroi intérieure du carter de transmission (72), et
dans laquelle le couvercle de pompe (40) est formé dans le carter de transmission (72).

8. Structure de fixation selon la revendication 7, dans laquelle un évidement (76) est formé dans une paroi extérieure du carter de transmission (72), et
dans laquelle l'unité de commande (50) est configurée pour être logée dans l'évidement (76).
